(19) Europäisches Patentamt
European Patent Office
Office européen des brevets

(11) **EP 3 206 059 A1**

(12) **DEMANDE DE BREVET EUROPEEN**

(43) Date de publication:
**16.08.2017 Bulletin 2017/33**

(51) Int Cl.:
***G02B 5/18*** (2006.01)      ***G02B 27/42*** (2006.01)

(21) Numéro de dépôt: **17153295.5**

(22) Date de dépôt: **26.01.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **12.02.2016 FR 1600237**

(71) Demandeur: **Thales**
**92400 Courbevoie (FR)**

(72) Inventeurs:
• **LEE-BOUHOURS, Mane-Si Laure**
  **91767 PALAISEAU Cedex (FR)**
• **LOISEAUX, Brigitte**
  **91767 PALAISEAU Cedex (FR)**
• **LEHOUCQ, Gaëlle**
  **91767 PALAISEAU Cedex (FR)**

(74) Mandataire: **Joubert, Cécile et al**
**Marks & Clerk France**
**Counseils en Propriete Industrielle**
**Immeuble "Visium"**
**22, avenue Aristide Briand**
**94117 Arcueil Cedex (FR)**

(54) **COMPOSANT DIFFRACTIF SUB LONGUEUR D'ONDE LARGE BANDE SPECTRALE**

(57) L'invention concerne un composant diffractif (10) large bande apte à diffracter un faisceau incident présentant une longueur d'onde comprise dans une bande spectrale de diffraction,
-le composant diffractif comprenant une pluralité de zones élémentaires agencées sur une surface (S), chaque zone élémentaire appartenant à un type indicé par un indice i compris entre 1 et n avec n strictement supérieur à 1, l'indice i correspondant à une longueur d'onde de blaze $\lambda i$ d'indice i, les longueur d'onde de blaze étant comprises dans la bande spectrale de diffraction,
-une zone élémentaire de type i (Zi, Z'i, Z"i) comprenant une pluralité de microstructures (MSi) présentant respectivement au moins une taille (di) inférieure à 1,5 fois la longueur d'onde de blaze ($\lambda i$) d'indice i, les microstructures étant agencées pour former un matériau artificiel présentant une variation d'indice effectif ($n_{eff}(i)$) de sorte qu'une zone élémentaire de type i constitue un élément diffractif blazé à la longueur de blaze $\lambda i$ d'indice i,
-les différentes valeurs des longueurs d'onde de blaze et la proportion de surface occupée par l'ensemble des zones d'un type donné étant fonction d'une efficacité de diffraction globale souhaitée dans la bande spectrale de diffraction.

FIG.11a

FIG.11b

EP 3 206 059 A1

FIG.11c

## Description

## DOMAINE DE L'INVENTION

L'invention concerne la réalisation d'un composant diffractif sub longueur d'onde de type binaire présentant une bonne efficacité de diffraction sur une large bande spectrale, pour diverses applications optiques (visible/ infrarouge) et hyperfréquences, telles que des réseaux ou des lentilles de focalisation, en transmission ou en réflexion.

## ETAT DE LA TECHNIQUE

Le processus de diffraction ne consiste pas dans une simple transmission ou réflexion d'un faisceau incident, lumineux ou radiofréquence, dans une nouvelle direction différente de celle du faisceau incident : le faisceau incident est divisé en plusieurs faisceaux, chacun redirigé sous un angle différent selon différents ordres de diffraction. Le pourcentage de lumière incidente redirigée dans un ordre de diffraction donné est la mesure de l'efficacité de diffraction dans cet ordre. L'efficacité d'un composant diffractif est déterminée par le profil de surface de cet élément.

On cherche typiquement à obtenir un maximum d'efficacité dans un ordre donné et à minimiser l'efficacité dans les autres ordres. Si le pourcentage de lumière qui n'est pas dirigé dans l'ordre de diffraction désiré est substantiel, cela se traduit par de la lumière parasite, transmise ou réfléchie selon le type de composant ou par une chute du flux lumineux dans la direction privilégiée, qui est néfaste à la qualité du composant ou du système intégrant le composant.

Pour optimiser l'efficacité dans un seul ordre de diffraction, il est connu de réaliser une structure diffractive dite « blazée », c'est-à-dire qui ne présente pas ou peu de lumière/onde diffractée dans les autres ordres que l'ordre désiré, dénommé ordre de blaze.

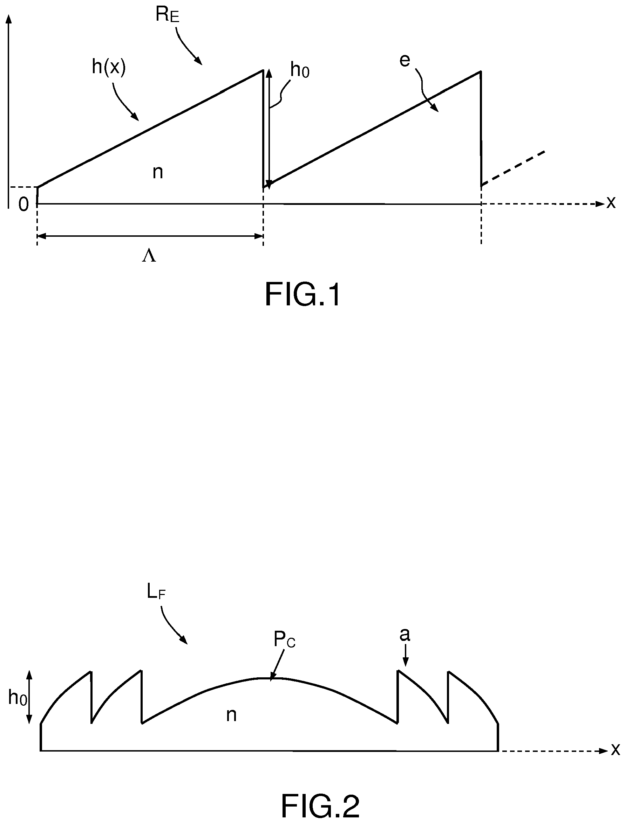

On connait des éléments diffractifs classiques tels que les réseaux à échelettes illustré figure 1, présentant une période $\Lambda$ qui détermine l'angle selon lequel l'ordre de blaze est diffracté, chaque période étant constituée d'un élément e dénommé échelette. On connait également les lentilles de Fresnel $L_F$ telles qu'illustrées figure 2, présentant une partie centrale Pc typiquement circulaire et des parties périphériques, des anneaux A typiquement concentriques (lorsque la lentille est dans l'axe).

L'effet de blaze recherché est obtenu par une variation progressive de la profondeur d'un matériau d'indice constant n vérifiant la condition de blaze définie ci-dessous.

Le profil de surface de ces éléments consiste ainsi en des reliefs continus séparés par des discontinuités. Ces éléments présentent une efficacité maximum pour une longueur d'onde déterminée $\lambda 0$, dénommée longueur d'onde de blaze.

La condition de blaze dans l'ordre 1 correspond à une variation de phase $\Delta\varphi$ d'un faisceau de longueur d'onde $\lambda 0$ incident sur le composant, entre x=0 et x= $\Lambda$, égale à $2\pi$.

$$\Delta\varphi(\lambda 0) = 2\pi$$

Par exemple pour un réseau à échelette en transmission, cette condition s'écrit classiquement

$$(n-1).h0 = \lambda 0$$

Où n est l'indice du matériau composant le réseau et h0 est la hauteur de la de l'échelette.

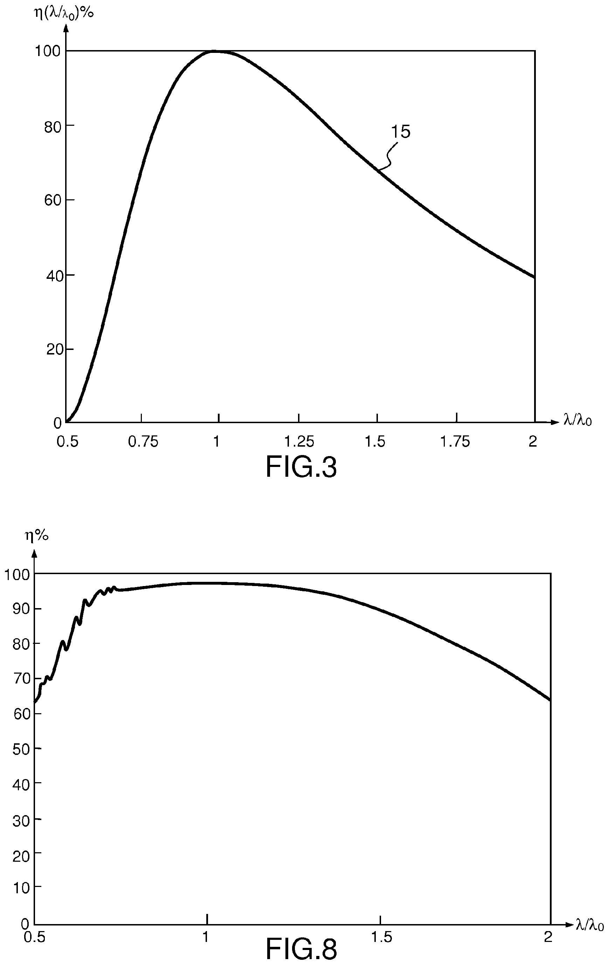

La figure 3 illustre graphiquement la courbe 15 d'efficacité de diffraction $\eta(\lambda)$ en transmission de l'ordre 1 pour un composant diffractif dans le domaine scalaire blazé dans l'ordre 1 en fonction de la longueur d'onde incidente $\lambda$, qui est donnée par la formule :

$$\eta(\lambda)=\sin c^2\left[\pi\left(1-\frac{\lambda_0}{\lambda}\right)\right] \quad (1)$$

avec

$$\sin c(x)=\frac{\sin(x)}{x}$$

La lumière perdue dans l'ordre de blaze (ordre 1) est diffractée dans des ordres supérieurs. Si on prend l'exemple d'une lentille hybride, qui est composée d'une lentille réfractive sur une face et diffractive sur l'autre face et où le rôle de la face diffractive est de corriger les aberrations chromatiques de la lentille réfractive, ce phénomène se traduit par la transmission d'une lumière parasite, qui est néfaste à la qualité de l'imagerie. Cela se traduit de façon pratique par l'apparition de lumière diffractée dans l'ensemble du plan image. Par exemple, l'image en sortie n'est pas nette, ou est terne.

On montre que cette chute d'efficacité provient de la faible dispersion du matériau, qui entraîne que pour une faible différence de longueur d'onde, la différence de phase $\Delta\varphi(\lambda)$ induite dans la structure s'écarte de $2\pi$ (alors qu'elle est égale à $2\pi$ à la longueur d'onde $\lambda_0$ de blaze).

Dans l'approximation scalaire, c'est-à-dire typiquement pour des composants ayant des largeurs de zone très grande à l'échelle de la longueur d'onde, typiquement supérieure à 100 fois la longueur d'onde, en négligeant les pertes de Fresnel, et en se plaçant avec un faisceau incident en incidence normale, la différence de phase en fonction de la longueur d'onde $\Delta\varphi(\lambda)$ et l'ef-

ficacité en fonction de la longueur d'onde $\eta(\lambda)$ sont en effet données par :

$$\Delta\varphi(\lambda)=2\pi\frac{\lambda_0}{\lambda}\frac{\Delta n(\lambda)}{\Delta n(\lambda_0)}\quad(2)$$

$$\eta(\lambda)=\mathrm{sinc}^2\left[\pi\left(1-\Delta\varphi(\lambda)/2\pi\right)\right]\quad(3)$$

où $\Delta n(\lambda) = (n(\lambda) - n_{air})$ soit $(n(\lambda) - 1)$, pour un élément d'optique diffractive gravé dans un matériau d'indice de réfraction n.

Pour ces éléments d'optique diffractive, on peut considérer que $\Delta n(\lambda) = \Delta n(\lambda_0)$, car la dispersion du matériau est négligeable : l'indice de réfraction varie peu autour de $\lambda_0$. L'équation (2) devient donc :

$$\Delta\varphi(\lambda)=2\pi\frac{\lambda_0}{\lambda}\quad(4)$$

et on obtient l'équation (1) vue plus haut et représentée sur la figure 3, en remplaçant $\Delta\varphi(\lambda)$ par cette expression dans (2).

Ainsi la faible dispersion du matériau optique dans les éléments d'optique diffractive classiques, entraîne une chute d'efficacité de la diffraction avec la longueur d'onde $\lambda \neq \lambda_0$ exprimée par l'équation (1). Cette variation de la différence de phase avec la longueur d'onde est également présente pour les composants diffractifs fonctionnant en réflexion.

Ces éléments d'optique diffractive classiques ne sont donc pas efficaces en large bande spectrale. On peut caractériser une large bande spectrale sur laquelle on souhaite diffracter par un paramètre $\Delta\lambda/\lambda0$, qui est typiquement supérieur à 20% dans le domaine de l'optique. Par exemple il est égal à 40% pour l'infrarouge thermique, ou égal à 100% pour des applications UV/VIS/NIR, et pouvant même prendre la valeur de 130% dans le domaine du photovoltaïque. On ne peut pas utiliser ces éléments d'optique diffractives classiques dans les systèmes optiques dédiés à des applications à large bande spectrale, tels que des réseaux ou des lentilles dans des instruments optiques (en transmission ou en réflexion) ou systèmes optiques hybrides, composés d'optiques réfractives et diffractives.

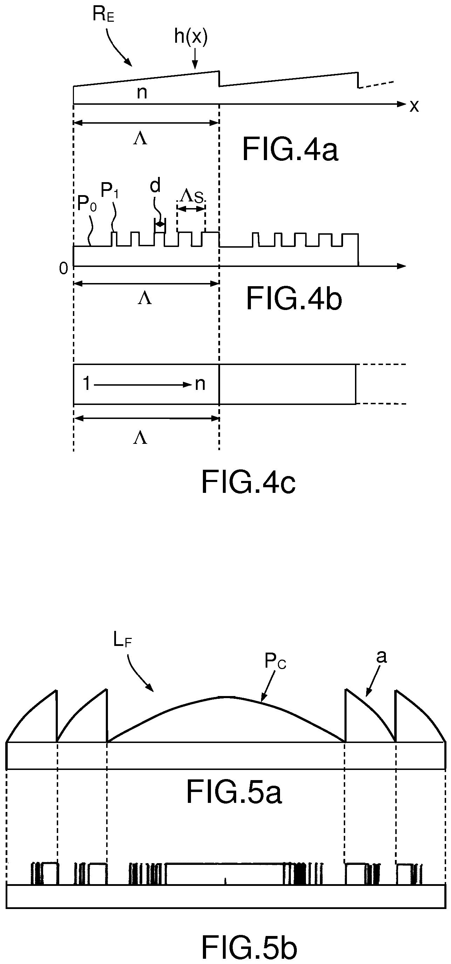

On connaît d'autres éléments d'optique diffractive, dits à microstructure binaire, encore appelés réseaux blazés binaires, ou éléments d'optique diffractive sub-longueur d'onde (SWDOE : "SubWavelength Diffractive Optic Element), décrits dans la publication « Broadband blazing with artificial dieclectrics » OPTICS LETTERS, Vol.29, No 14, 2004 et le document WO 2005/038501. Ces réseaux blazés binaires sont conçus en réalisant une synthèse binaire du profil d'un élément d'optique diffractive classique : on part de l'élément d'optique diffractive classique que l'on veut synthétiser et on échantillonne ce réseau pour obtenir des points, auxquels on peut associer une valeur d'indice ou de déphasage. L'échantillonnage doit se faire à une période inférieure à la longueur d'onde de conception, pour obtenir un réseau fonctionnant en régime sub-longueur d'onde. Les diverses techniques de calcul utilisées sont connues de l'homme du métier et ne seront pas rappelées ici. Ces techniques permettent, par exemple, pour un réseau blazé à échelettes tel que le réseau RE représenté sur la figure 1 et 4a, de définir un réseau blazé binaire comme représenté à la figure 4b. Si on reprend la figure 4a, deux échelons d'un réseau à échelettes RE de période A (ou pas du réseau) sont représentés. Ces échelons sont gravés dans un matériau optique d'indice n.

Un réseau blazé binaire correspondant au réseau RE de la figure 4a est représenté sur la figure 4b. Le réseau RE est échantillonné sur un certain nombre de points à la période $\Lambda_s$ choisie inférieure à la longueur d'onde de blaze $\lambda_0$. On obtient un certain nombre de points pour chaque période A du réseau. A chaque point on fait correspondre un facteur de remplissage donné pour un type de microstructure donné (trou, pilier) : ce facteur de remplissage est égal à la dimension d de la microstructure rapportée à la période d'échantillonnage du réseau : $f = d/\Lambda_s$. Le facteur de remplissage de chaque microstructure est défini, par des calculs connus, pour donner localement une valeur de déphasage $\Phi(x)$ semblable à celle du réseau échelette au point échantillonné, et égale de manière connue à

$$\Phi(x)=2\pi(n-1)h(x)\frac{1}{\lambda},$$ où x est la coordonnée du point échantillonné sur l'axe 0x du réseau.

Dans l'exemple de la figure 4b, les microstructures binaires sont de type pilier. On obtient un ensemble de microstructures binaires qui codent le motif à échelon du réseau. Cet ensemble de microstructures se répète à la période A du réseau à échelette de la figure 4a.

Dans l'opération de synthèse, on définit donc un facteur de remplissage f pour chaque microstructure qui varie d'une microstructure à l'autre pour suivre la fonction de phase du réseau à échelette. Dans l'exemple, sur chaque période A du réseau échelette (pour chaque échelon), cette dimension d augmente avec x. En pratique, le facteur de remplissage f d'une microstructure binaire du réseau peut prendre toute valeur réelle comprise entre 0 et 1, y compris les valeurs 0 et 1. Par exemple, pour le pilier $p_0$ sur la figure 4b, le facteur de remplissage est 0.

Sur les figures 5a et 5b on a représenté un élément d'optique diffractive classique de type lentille de Fresnel $L_F$ (figure 5a), et sa synthèse binaire au moyen de microstructures (figure 5b).

Pour décrire le comportement d'un élément d'optique diffractive binaire, on introduit une notion d'indice effectif $n_{eff}$ pour décrire l'interaction de la lumière sur les microstructures. Avec cette notion, on assimile la structure de l'élément à un matériau artificiel homogène, donnant sur le composant un profil d'indice comparable à un réseau à gradient d'indice effectif, dont l'indice effectif varie sur la période A (ou la portion) du réseau considéré. La figure 4c représente schématiquement un réseau à gradient d'indice effectif correspondant au réseau blazé binaire de la figure 4b.

Cette notion d'indice effectif et des formules analytiques permettant de le calculer sont décrites en détail dans différentes publications, parmi lesquelles on peut citer la suivante : "On the effective medium theory of subwavelength periodic structures", Journal of Modern Optics, 1996, vol.43, N° 10, 2063-2085 par Ph. Lalanne, D. Lemercier-Lalanne, qui montre notamment les courbes de variation d'indice effectif avec le facteur de remplissage et de la longueur d'onde incidente (p 2078).

En pratique, l'indice effectif est fonction du facteur de remplissage f (et donc de la période d'échantillonnage $\Lambda_s$), de la géométrie de la microstructure, de l'indice n du matériau (ou, ce qui est équivalent, de sa permittivité $\varepsilon$) et de la longueur d'onde incidente $\lambda$. Différentes formules analytiques sont ainsi connues de l'homme du métier, qui permettent de calculer, pour un matériau artificiel donné, les courbes de variation de l'indice effectif en fonction du facteur de remplissage f des microstructures (donc en fonction de d et $\Lambda_s$) et en fonction de la longueur d'onde incidente $\lambda$.

En pratique, cette notion est valable dans tous les cas où la période d'échantillonnage $\Lambda_s$ est sensiblement inférieure à la valeur de coupure structurelle de l'élément, donnée par $\dfrac{\lambda_0}{n}$, où n est l'indice de réfraction du matériau des microstructures. Ce paramètre donne la limite de valeur de la période d'échantillonnage au-delà de laquelle, pour tout facteur de remplissage, le matériau ne se comporte plus comme un matériau homogène (couche mince), et pour lequel on ne travaille plus en régime sub-longueur d'onde. Au-delà de cette valeur, on a plusieurs modes de propagation, et plusieurs indices effectifs.

On se place donc dans des conditions de propagation sensiblement sub-longueur d'onde avec $\Lambda_s$ $\leq 1,5.\lambda_0$ (de préférence $\Lambda_s \leq \lambda_0$ ou $\Lambda_s \leq \dfrac{\lambda_0}{n}$ ). Typiquement en pratique on choisit généralement $\Lambda_s = \lambda_0/2$ ou $\lambda_0/3$.

Dans ces conditions, l'effet de blaze (c'est à dire la diffraction de la lumière incidente dans un seul ordre de diffraction, l'ordre de blaze) est donc obtenu par variation de l'indice optique le long de la surface du matériau optique. En effet, les microstructures sont trop petites (sub-longueur d'ondes) pour être résolues par la lumière incidente (en terme de champ lointain en diffraction) qui perçoit localement, un indice moyen, l'indice effectif $n_{eff}$. Sur une période (réseau) ou une partie (lentille de Fresnel), l'utilisation de microstructures sub-$\lambda$ permet de réaliser une loi de phase optimisée pour que l'énergie rayonnée dans le faisceau défléchi principal (ordre de blaze) soit favorisée, et l'énergie diffractée dans les faisceaux diffractés parasites soit minimisée.

Les microstructures habituelles ont des géométries soit en creux de type trou, par exemple cylindrique, soit en saillies de type pilier, par exemple à section ronde, carrée, hexagonale ou rectangulaire. Une combinaison de trous et de piliers est également possible. Les microstructures sont de forme quelconque, préférentiellement avec des axes de symétrie pour les rendre indépendantes de la polarisation du faisceau incident en incidence normale.

Avantageusement, elles sont disposées, au sein d'une période (réseau) ou d'une partie (lentille de Fresnel), selon une période d'échantillonnage $\Lambda_s$ au moins sur la direction 0x du plan de surface du réseau ou selon un rayon partant du centre pour une lentille pour une lentille dans l'axe. La structure d'une lentille hors d'axe est également applicable à l'invention.

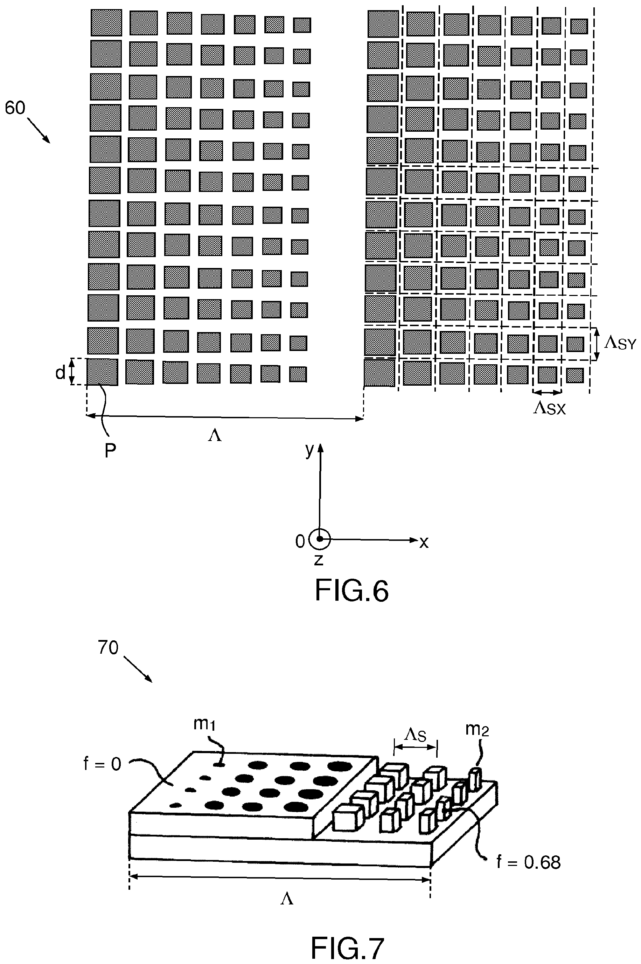

La figure 6 illustre un élément 60 synthétisant un réseau à base de piliers P vue de dessus. Dans l'exemple de réseau 2D représenté à la figure 6 de façon schématique, la maille est carrée de dimensions $\Lambda_{sx} = \Lambda_{sy} = \Lambda_s$. On a dans cet exemple une microstructure P par maille, par exemple au centre de chaque maille. Les microstructures alignées selon la direction 0X du plan de surface XY du réseau sont affectées d'un facteur de remplissage variant progressivement dans un ordre déterminé, croissant ou décroissant le long de la direction principale 0X du réseau.

Dans le cas d'une synthèse d'un réseau de type à échelette (ou multi-niveaux) les microstructures alignées selon l'autre dimension 0Y du réseau ont un facteur de remplissage identique.

Dans le cas (non représenté ici), d'une synthèse de zones d'une lentille de Fresnel, le facteur de remplissage de ces microstructures peut varier dans toutes les directions.

Ces éléments d'optique diffractive blazés binaires sont connus pour présenter des efficacités bien supérieures à celles des optiques classiques, et sont utilisés dans le cas de réseaux à forte dispersion ou pour des lentilles hybrides à forte ouverture numérique .

Le document WO 2005/038501 décrit par ailleurs un type particulier de réseau blazé par transmission utilisant la forte dispersion des matériaux artificiels pour compenser la variation de l'efficacité de diffraction en fonction de la longueur d'onde du faisceau incident, dans le but d'obtenir des éléments d'optique diffractive blazés sur une large bande spectrale, c'est-à-dire des éléments d'optique diffractive efficaces dans leur ordre de blaze sur une large gamme spectrale. Ces réseaux particuliers, tel qu'illustré figure 7 utilisent deux de microstructures différentes, comme des trous m1 et des piliers m2. Dans une première portion, les microstructures selon la première géométrie présentent un indice effectif décroissant avec le facteur de remplissage, et dans une seconde portion les microstructures selon la deuxième géométrie synthétisent un indice effectif croissant avec le facteur de remplissage.

Le matériau artificiel composite 70 dont la structure est illustrée figure 7 présente un gradient d'indice effectif qui varie entre une valeur minimum $n_{eff/min}$ et une valeur maximum $n_{eff/max}$. Les indices effectifs minimum et maximum du matériau sont déterminés à partir des courbes de variation de l'indice effectif avec le facteur de remplissage des microstructures.

Un paramètre caractéristique du matériau est le paramètre $\alpha$ défini par :

$$\alpha = \frac{(\delta n_{min} - \delta n_{max})}{\Delta n_{eff}(\lambda_0)}, \qquad (5)$$

où

$$\Delta n_{eff}(\lambda_0) = n_{eff/max}(\lambda_0) - n_{eff/min}(\lambda_0),$$

$$\delta n_{min} = n_{eff/min}(\lambda_0) - n_{eff/min}(\lambda_\infty)$$

et

$$\delta n_{max} = n_{eff/max}(\lambda_0) - n_{eff/max}(\lambda_\infty)$$

Avec $\lambda_0$ longueur d'onde de conception (ou longueur d'onde blaze) et $\lambda_\infty$ longueur d'onde grande devant la longueur d'onde de conception $\lambda_0$.

Pour obtenir un réseau qui offre une largeur spectrale optimum, il faut que le paramètre de caractérisation $\alpha$ soit strictement supérieur à 0, $\alpha > 0$ et préférentiellement $0,3 \leq \alpha \leq 0,5$.

On détermine donc les caractéristiques du matériau 70 (indice n, facteur de remplissage des piliers et des trous, sous période d'échantillonnage...) de manière à obtenir des valeurs d'indice effectif extrêmes aboutissant à la valeur de $\alpha$ souhaitée.

Le document WO 2005/038501 décrit à titre d'exemple une gamme d'indice effectif entre 1,5 et 2,1, avec $\Lambda_s = \lambda_0/2$. La période d'échantillonnage $\Lambda_s$ code la zone de période A égale à $25\lambda_0$, correspondant à 50 microstructures (35 trous et 15 piliers). Le premier point est codé par f=0 par une microstructure de type trou. Le dernier point est codé par une microstructure de type pilier codé avec f=0,68.

L'élément 70 a été réalisé dans du nitrure de silicium $Si_3N_4$ (n=2,1) avec des de trous cylindriques à section ronde et de piliers à section carrée gravés. La profondeur h de gravure est de $1,875\lambda_0$. L'indice effectif maximum $n_{eff/max}$ est codé à l'aide de trous de diamètre nul ($n_{eff/max} = n = 2.1$) et l'indice effectif minimal $n_{eff/min}$ est codé à l'aide de piliers de facteur=0,68, soit de largeur $d=0,34\lambda_0$. Pour ce réseau blazé binaire à matériau artificiel composite, on a $\alpha = 0,39$.

La courbe d'efficacité de diffraction en fonction de la longueur d'onde est donnée à la figure 8 : on obtient bien une zone autour de $\lambda 0$ assez large dans laquelle l'efficacité de diffraction est à son maximum égale à 96% et reste au-dessus de 90% entre $0,6\lambda_0$ et $1,5\lambda_0$. L'efficacité de diffraction n'atteint pas 100% en pratique à cause des discontinuités du profil de surface quand on passe d'un type de géométrie à un autre. Au niveau de la discontinuité, on a un effet d'ombrage et un effet de discontinuité de phase.

L'efficacité de diffraction de ce réseau a été calculée pour une période de réseau A égale à $25\lambda_0$. Lorsque l'on a une période supérieure, l'effet des discontinuités est moindre, et l'efficacité est donc meilleure. A une période inférieure à $25\lambda_0$, l'effet des discontinuités est plus important et on perd en efficacité. On obtient une moins bonne largeur spectrale, mais l'amélioration de la largeur de bande peut être satisfaisante pour certaines applications.

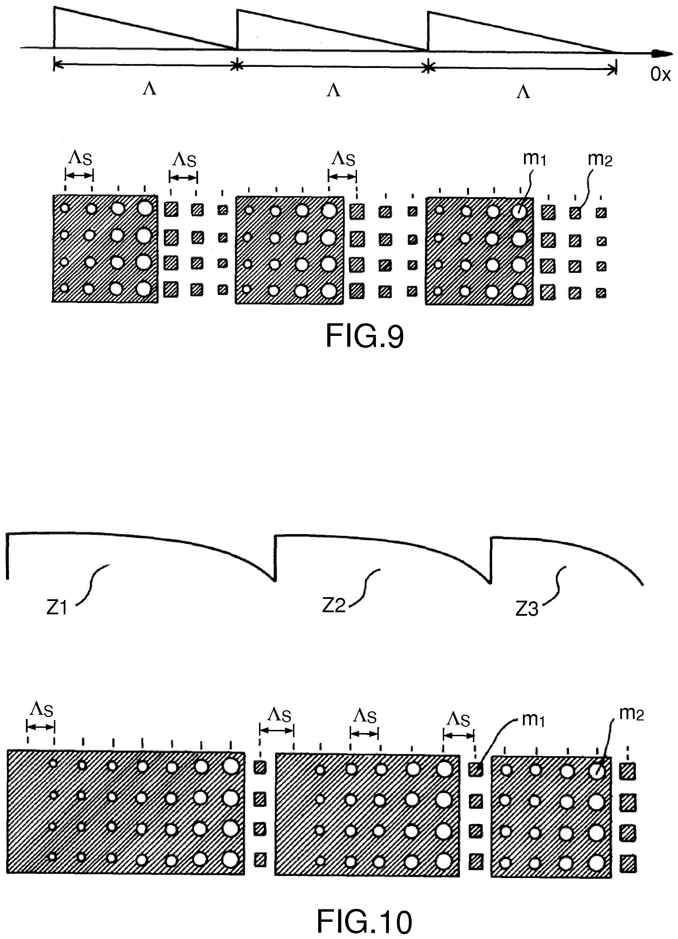

Ainsi, l'utilisation de matériaux artificiels composites ne se limite pas à des composants opérant dans le domaine scalaire. On peut appliquer le concept de matériau artificiel composite à la réalisation de différents composants diffractifs sub longueur d'onde, tels un réseau illustré figure 9 ou une lentille de Fresnel illustrée figure 10.

Cependant, la largeur spectrale de l'efficacité de diffraction illustrée sur la figure 8 n'est pas suffisante pour certaines applications telles que la spectroscopie et la réalisation d'instruments optique ou radiofréquence pour l'espace (télescopes ..).

D'autre part, le paramètre $\alpha$, dépend significativement du matériau choisi, de la période et de la hauteur des structures, ceci devant prendre en compte les contraintes de fabrication. Dans certaines applications, le choix du matériau n'est pas toujours propice à un paramètre $\alpha > 0.3$, correspondant à une valeur propice à une utilisation du composant sur une très large bande. Il n'est donc pas toujours aisé de trouver l'ensemble des conditions idéales pour le paramètre $\alpha$. Il est souvent nécessaire de se contenter d'un $\alpha$ légèrement réduit.

Un but de la présente invention est de remédier aux inconvénients précités en proposant un composant diffractif sub longueur d'onde présentant une largeur spectrale de son efficacité de diffraction augmentée et une plus grande souplesse de design pour obtenir un gabarit de courbe d'efficacité $\eta(\lambda)$ donné.

## DESCRIPTION DE L'INVENTION

La présente invention a pour objet un composant diffractif large bande apte à diffracter un faisceau incident présentant une longueur d'onde comprise dans une bande spectrale de diffraction,

- le composant diffractif comprenant une pluralité de zones élémentaires agencées sur une surface, chaque zone élémentaire appartenant à un type indicé par un indice i compris entre 1 et n avec n strictement supérieur à 1, l'indice i correspondant à une longueur d'onde de blaze λi d'indice i, les longueurs d'onde de blaze étant comprises dans la bande spectrale de diffraction,
- une zone élémentaire de type i comprenant une pluralité de microstructures présentant respectivement au moins une taille inférieure à 1,5 fois la longueur d'onde de blaze d'indice i, les microstructures étant agencées pour former un matériau artificiel présentant une variation d'indice effectif de sorte qu'une zone élémentaire de type i constitue un élément diffractif blazé à la longueur de blaze λi d'indice i,
- les différentes valeurs des longueurs d'onde de blaze et la proportion de surface occupée par l'ensemble des zones d'un type donné étant fonction d'une efficacité de diffraction globale souhaitée dans la bande spectrale de diffraction.

Préférentiellement, les zones élémentaires sont jointives.

Avantageusement la surface est plane ou courbe.

Avantageusement, le faisceau incident est une onde lumineuse ou radiofréquence.

Selon un mode de réalisation les zones élémentaires sont agencées sur un substrat transparent, le composant étant configuré pour diffracter le faisceau par transmission.

Selon un autre mode de réalisation le composant selon l'invention comprend en outre un réflecteur, le réflecteur étant disposé entre les zones élémentaires et un substrat, le composant étant configuré pour diffracter le faisceau par réflexion.

Selon une première variante le composant correspond à une lentille de Fresnel présentant une partie centrale et une pluralité de parties périphériques, dans lequel chaque zone élémentaire de type i correspond à au moins un secteur d'une partie de la lentille de Fresnel.

Selon une deuxième variante le composant correspond à un réseau, chaque zone élémentaire de type i correspondant à un réseau blazé à la longueur de blaze λi d'indice i, chaque zone élémentaire présentant une variation d'inde effectif périodique selon un axe X de période identique pour tous les types, une dimension d'une zone élémentaire selon la direction X étant égale à un multiple de la période.

Selon un mode de réalisation la dimension d'une zone élémentaire selon X correspond à la dimension du composant selon X.

Selon un mode de réalisation les zones élémentaires sont agencées selon une direction Y perpendiculaire à X de sorte que tous les types se succèdent une fois chacun, une pluralité de fois, et dans lequel l'ordre des types et la dimension selon Y des zones de chaque type se répète à l'identique. Préférentiellement les microstructures d'une zone élémentaire présentent une forme de pilier, une forme de trou ou une combinaison des deux. Avantageusement, le composant diffractif selon l'invention comprend en outre une couche antireflet disposée par dessus les microstructures. Préférentiellement la couche antireflet est une couche structurée à l'échelle sub-longueur d'onde.

Selon un mode de réalisation le composant selon l'invention comprend en outre une pluralité de microstructures secondaires présentant une taille inférieure à la taille des microstructures de base.

Avantageusement une variation d'indice effectif d'un élément diffractif blazé à une longueur d'onde de blaze λi sur une période d'un réseau ou une partie d'une lentille de Fresnel, présente une valeur minimale et une valeur maximale, la différence desdites valeurs d'indice effectif étant dénommée $\Delta n_{eff}(i)$, les microstructures d'une zone de type i présentent une hauteur hi indicée i, les grandeurs $\Delta n_{eff}(i)$, hi et λi étant reliées par une condition de blaze définie par :

$\Delta n_{eff}(i).hi = λi$ pour un composant diffractif fonctionnant en transmission,

2. $\Delta n_{eff}(i).hi = λi$ pour un composant diffractif fonctionnant en réflexion.

Avantageusement pour chaque zone élémentaire de type i, les microstructures sont agencées de sorte que la différence $\Delta n_{eff}(i)$ vérifie la condition de blaze pour une valeur de hauteur h identique pour tous les types.

Selon un mode de réalisation, pour chaque zone élémentaire de type i, les microstructures sont agencées de sorte que la différence $\Delta n_{eff}(i)$ est choisie pour qu'un paramètre de caractérisation αi défini ci-dessous soit strictement supérieur à 0 quelque soit i :

$$\alpha i = \frac{\left(\delta n_{i/\min} - \delta n_{i/\max}\right)}{\Delta n_{eff}\left(i\right)} > 0$$

Avec :

$n_{eff}(i)$ variation de l'indice effectif d'une zone élémentaire blazée à la longueur d'onde λi sur une période (réseau) ou une partie (lentille de Fresnel) entre une valeur minimale $n_{eff/min}(i)$ et une valeur maximale $n_{eff/max}(i)$,

$$\Delta n_{eff}(i) = n_{eff/max}(i) - n_{eff/min}(i),$$

$$\delta n_{i/min} = n_{eff/min}(i) - n_{eff/min}(\lambda_\infty)$$

et

$$\delta n_{i/max} = n_{eff/max}(i) - n_{eff/max}(\lambda_\infty).$$

Avec i correspondant à une longueur d'onde $\lambda_i$ de conception (ou longueur d'onde blaze) et $\lambda_\infty$ longueur d'onde grande devant la longueur d'onde de conception $\lambda_0$.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée illustre un réseau à échelette classique.

La figure 2 déjà citée illustre une lentille de Fresnel classique.

La figure 3 déjà citée schématise l'efficacité de diffraction en transmission pour un composant diffractif dans le domaine scalaire blazé dans l'ordre 1 en fonction de la longueur d'onde incidente λ.

La figure 4a déjà citée reprend le réseau diffractif classique à échelette de la figure 1, la figure 4b illustre une synthèse binaire sub longueur d'onde de ce réseau au moyen de microstructures de type pilier et la figure 4c représente un réseau à gradient d'indice effectif correspondant.

La figure 5a déjà citée illustre un élément d'optique diffractive classique du type lentille de Fresnel, et la figure 5b illustre une synthèse binaire sub longueur d'onde de cette lentille au moyen de microstructures de type pilier.

La figure 6 déjà citée illustre un élément synthétisant un réseau à base de piliers P vue de dessus.

La figure 7 déjà citée illustre une période d'un réseau particulier sub longueur d'onde composite utilisant deux géométries de microstructures différentes.

La figure 8 déjà citée décrit l'efficacité de diffraction en transmission en fonction de la longueur d'onde incidente λ d'un réseau composite tel que décrit figure 7.

La figure 9 déjà citée illustre une structure bidimensionnelle de réseau à base d'éléments sub longueur d'onde composites.

La figure 10 déjà citée illustre une structure bidimensionnelle de lentille de Fresnel composite à base d'éléments sub longueur d'onde composites.

La figure 11 illustre un composant diffractif large bande selon l'invention de type réseau. La figure 11a décrit la structure du réseau vue de dessus, la figure 11 b les microstructures d'une zone particulière du réseau et la figure 11 c l'indice effectif correspondant.

La figure 12 illustre un composant diffractif large bande selon l'invention de type lentille de Fresnel. La figure 12a décrit la structure d'une lentille vue de dessus, la figure 12b les microstructures d'une zone particulière de la lentille et la figure 12c l'indice effectif correspondant.

La figure 13 illustre un composant diffractif multi blaze binaire selon l'invention configuré pour diffracter par réflexion

La figure 14 illustre un mode de réalisation particulier d'un réseau multi blaze binaire selon l'invention.

La figure 15 illustre un exemple du mode de réalisation de la figure 14. La figure 15a schématise la structure du réseau vue de dessus et la figure 15b décrit l'agencement des microstructures correspondantes en vue de dessus.

La figure 16 schématise la variation d'indice effectif obtenue pour le réseau décrit figure 15

La figure 17 illustre l'efficacité de diffraction en fonction de la longueur d'onde du réseau illustré figure 15, ainsi que les efficacités de diffraction de réseaux simple blaze.

La figure 18 illustre l'efficacité de diffraction en fonction de la longueur d'onde du réseau illustré figure 15 et l'efficacité avec un réseau identique muni d'une couche anti reflet.

La figure 19 illustre un composant diffractif multi blaze binaire selon l'invention muni d'une couche anti reflet disposée par-dessus les microstructures.

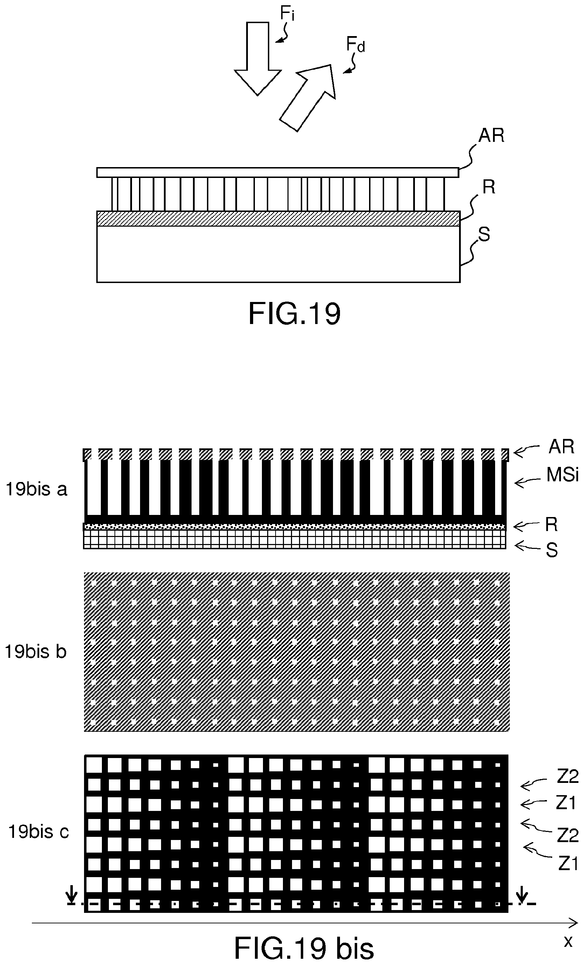

La figure 19bis illustre un composant diffractif multi blaze binaire selon l'invention muni d'une couche anti reflet structurée à l'échelle sub longueur d'onde.

La figure 19bisa illustre la structure du composant selon l'invention vu de profil, la figure 19bisb illustre la couche antireflet structurée AR vue de dessus et la figure 19bisc illustre un exemple de zones selon l'invention vues de dessus.

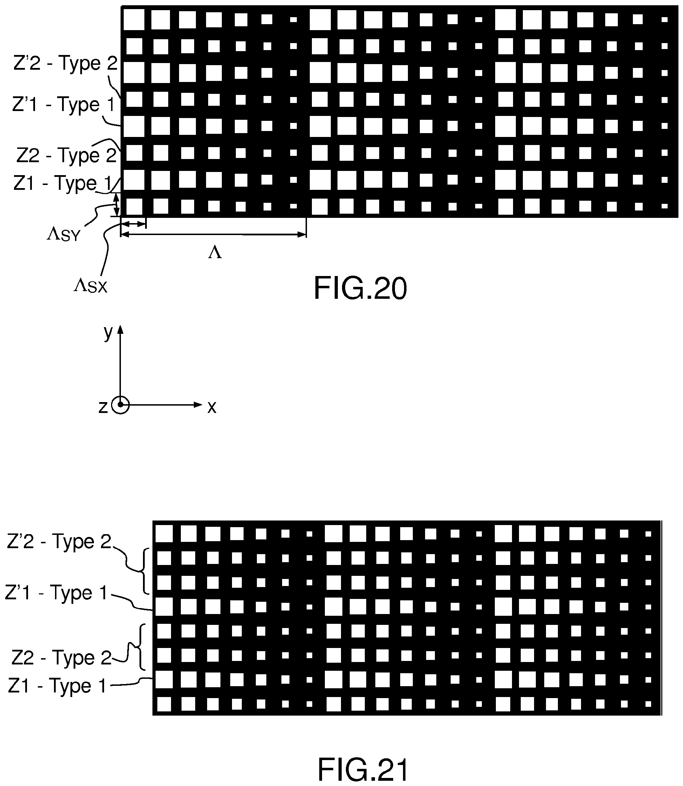

Les figures 20 et 21 illustrent deux exemples d'agencement de réseau selon l'invention présentant des pondérations sur les longueurs d'onde de blaze différentes.

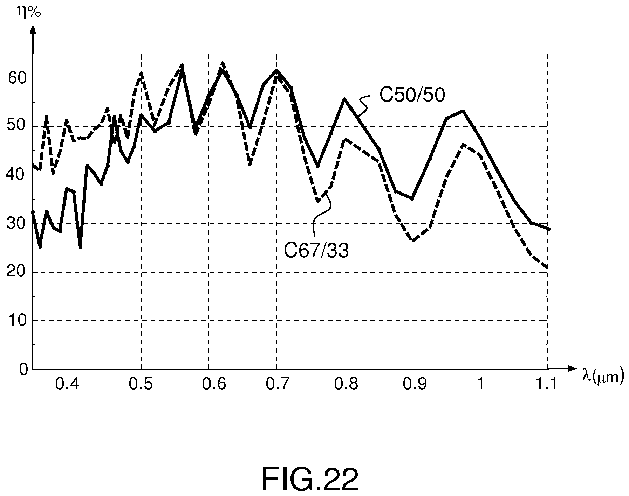

La figure 22 décrit l'efficacité de diffraction en fonction de la longueur d'onde pour les deux exemples des figures 20 et 21.

## DESCRIPTION DETAILLEE DE L'INVENTION

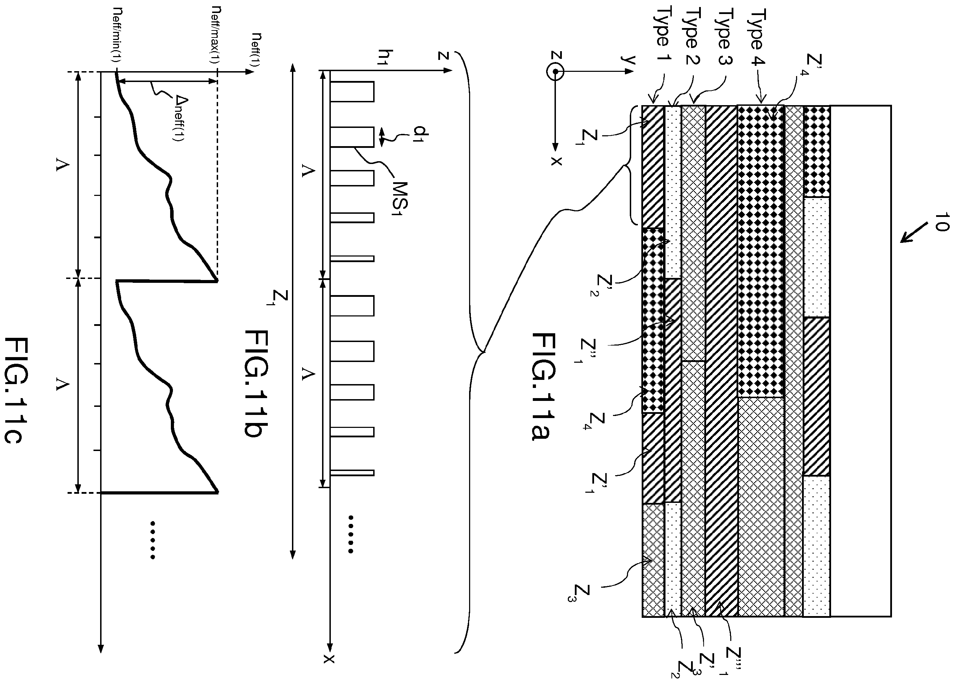

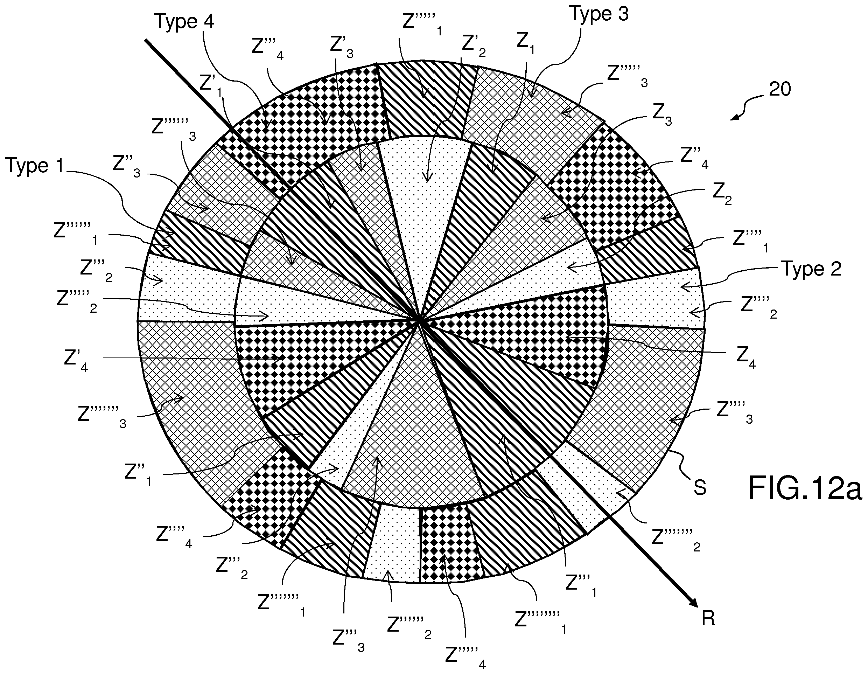

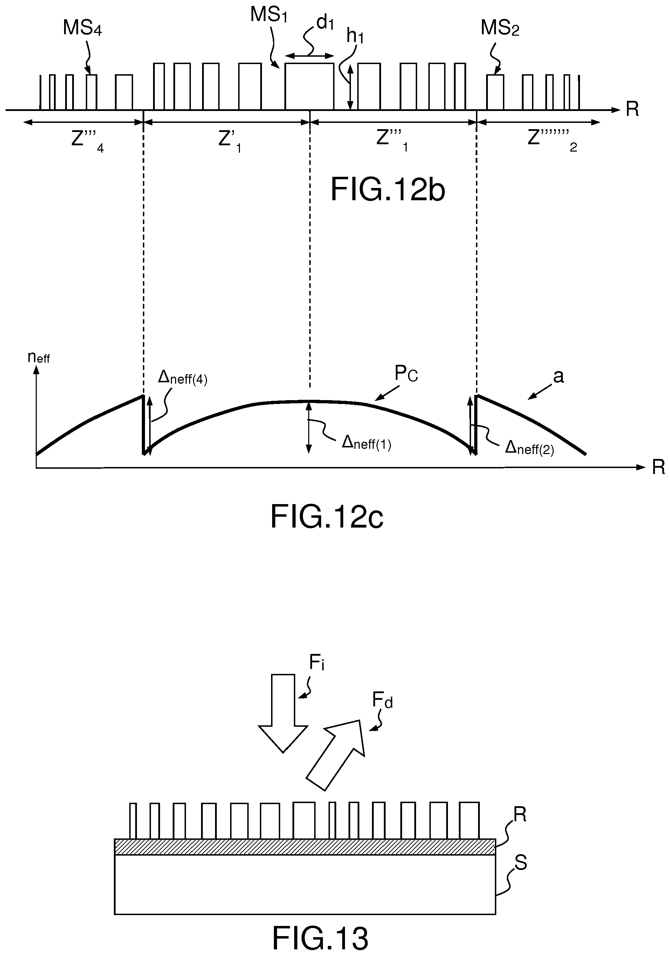

La figure 11 illustre un composant diffractif large bande selon l'invention, de type réseau 10. La description du composant diffractif est faite ci-dessous pour le composant réseau illustré figure 11 (11a, 11 b et 11 c) mais les considérations développées s'appliquent de la même manière à un composant diffractif large bande selon l'invention de type lentille de Fresnel 20 illustré figure 12 (12a, 12b et 12c).

Le composant diffractif 10 (20) selon l'invention est apte à diffracter un faisceau incident, qui est typiquement un faisceau lumineux, par example visible /infrarouge ou un faisceau hyperfréquence, typiquement compris entre 300 MHz et 300 GHz (voir par example le document WO2014/128015), présentant une longueur d'onde comprise dans une bande spectrale de diffraction BSD.

Le composant diffractif dont la vue de dessus est illustrée figure 11a (réseau) et figure 12a (lentille de Fresnel) comprend une pluralité de zones élémentaires Z1, Z'1, Z"1, Z2, Z'2, Z"2, Z3, Z'3, Z"3, Z4, Z'4....agencées sur une surface S. Chaque zone élémentaire appartient à un type indicé par un indice i compris entre 1 et n avec n (entier) strictement supérieur à 1, l'indice i correspondant à une longueur d'onde de blaze $\lambda i$ d'indice i. Ainsi le composant diffractif selon l'invention comprend au moins deux zones élémentaires de type différent.

Par example les zones Z1, Z'1, Z"1 sont de type 1, c'est à dire correspondent à une longueur de blaze $\lambda 1$, les zones Z2, Z'2, Z"2 sont de type 2, c'est à dire correspondent à une longueur de blaze $\lambda 2$, etc...

Les longueurs d'onde de blaze $\lambda 1$, $\lambda 2$, $\lambda i$, $\lambda N$ sont comprises dans la bande spectrale de diffraction BSD du composant diffractif 10 (20).

Une zone élémentaire de type i Zi, Z'i, Z"i comprend une pluralité de microstructures MSi présentant respectivement au moins une taille di inférieure à 1,5 fois la longueur d'onde de blaze $\lambda i$ d'indice i pour que le composant fonctionne globalement en régime sub longueur d'onde.

Préférentiellement l'ensemble des microstructures d'une zone élémentaires présentent une taille di inférieure à 1,5 fois la longueur d'onde de blaze $\lambda i$ d'indice i.

La taille des microstructures est ainsi globalement de l'ordre de grandeur ou inférieure à la longueur d'onde blaze.

Avantageusement, l'ensemble des microstructures d'une zone élémentaire présentent une taille di inférieure à 1,2 fois la longueur d'onde de blaze $\lambda i$ d'indice i pour éviter une perte d'efficacité par diffraction sur les ordres parasites.

Les microstructures sont agencées pour former un matériau artificiel présentant une variation d'indice effectif $n_{eff}(i)$ de sorte que la zone élémentaire de type i constitue un élément diffractif blazé à la longueur de blaze $\lambda i$ d'indice i.

Ainsi chaque zone élémentaire de type i est une zone présentant une structure sub longueur d'onde correspondant à une structure décrite dans l'état de la technique, pour une longueur d'onde de conception (ou de blaze) égale à $\lambda i$.

Les microstructures sont des piliers, des trous ou une combinaison des deux. Au sein d'une période, la forme respective des trous ou des piliers peut varier (section rectangulaire, hexagonale, circulaire), et lors d'une transition piliers/trous à l'intérieur d'une même période, une forme particulière de trou ou de pilier peut être utilisée.

Les figures 11 b et 12b représentent des zones de type i constituée de piliers MSi de taille di et de hauteur hi variable, et les figures 11 c et 12c représentent la variation d'indice effectif correspondante.

La zone Z1 de la figure 11 b correspond à un réseau blazé et présente donc une structure périodique de période $\Lambda$ selon au moins une dimension X.

Les zones Z'1, Z"'1 (type 1) de la figure 12b correspondent à des secteurs de la partie centrale Pc d'une lentille de Fresnel, et les zones Z""'2 (type 2) et Z"'4 (type 4) correspondent à des secteurs de la partie périphérique correspondant au premier anneau.

Sur les figures 11a et 12a, plusieurs zones de type 1 (Z1, Z'1, Z"1,...), de type 2 (Z2, Z'2,...) etc... sont réparties selon la surface S. De manière générale les zones sont réparties de manière quelconque, sans ordre particulier.

Les différentes valeurs des longueurs d'onde de blaze $\lambda i$ sont comprises dans la bande spectrale de diffraction souhaitée et sont choisies de manière à ce que le composant 10 (20) diffracte avec une bonne efficacité un faisceau incident présentant une longueur d'onde incidente comprise dans la bande spectrale de diffraction souhaitée. Pour cela, chaque zone de type i (Zi, Z'i, Z"i,...) diffractant autour d'une longueur de blaze donnée contribue à l'efficacité de diffraction globale du composant, qui bénéficie d'un effet résultant de la somme des interactions entre les amplitudes complexes élémentaires diffractées par chaque zone de type i. Ces amplitudes prennent entre autre en compte les effets de guidage qui apportent une meilleure efficacité de diffraction que l'efficacité d'un réseau à échelette. Ainsi l'efficacité globale du composant diffractif ne correspond pas à la moyenne des efficacités de chaque zone.

Deux effets se cumulent. Tout d'abord un effet macroscopique : le fait de mettre deux zones l'une à côté de l'autre, chaque zone ayant la même période selon x, permet de maintenir la périodicité d'un réseau dans la direction des x pour pouvoir diffracter l'ordre 1 dans la direction désirée.

Ensuite associer les deux zones revient à les ajouter de manière cohérente. Cependant, localement nous avons des structures sub-longueur d'onde qui non seulement permettent de coder une fonction de phase grâce à leur indice effectif local, ce qui permet de coder la fonction de phase d'un réseau échelette, mais en plus elles ont une autre particularité. Ces structures se comportent localement comme des guides d'onde et induisent un effet de guidage de l'onde qui permet d'obtenir une meilleure efficacité de diffraction que l'efficacité d'un réseau échelette. Cet effet de guidage qui est à l'origine des bonnes performances des réseaux sub-longueur d'onde a été expliqué dans la publication de Lalanne, ref : Ph.Lalanne, «Waveguiding in blazed-binary diffractive elements», Journal of Opt. Soc. Am. A., Vol. 16, 2517-2520 (1999). Dans notre cas d'application, la combinaison de deux zones côte à côte, induit des effets de guidages différents influencés par les effets de guidage dans les structures qui sont différents des effets de guidage de chaque zone individuellement.

De plus la proportion de surface occupée par l'ensemble des zones d'un type donné permet de s'adapter à un gabarit de l'efficacité de diffraction globale souhaitée. Le pourcentage de surface associé à un type permet d'introduire une pondération de la contribution des différentes longueurs d'onde de blaze dans l'efficacité de diffraction globale.

Ainsi l'existence d'une pluralité de longueurs d'onde de blaze permet au composant diffractif (par exemple un réseau ou une lentille de Fresnel) selon l'invention, que nous dénommerons composant diffractif multi-blaze binaire (binaire signifiant qu'il est à base de microstructures), de présenter un meilleur comportement large bande qu'un composant blazé à une longueur d'onde unique tel qu'illustré figures 3 ou 8. De plus, la pondération par la surface donne une grande souplesse de design pour obtenir l'efficacité souhaitée. Des illustrations de cette propriété sont données plus loin.

Par ailleurs les contraintes de design pesant sur chaque zone d'un type donné sont réduites.

Ainsi l'invention permet de s'affranchir de la condition en $\alpha$ par exemple ou de permettre une réduction du paramètre $\alpha$ tout en maintenant une bonne efficacité spectrale. En effet, dans le document WO 2005/038501, le comportement large bande est obtenu grâce à un design permettant d'obtenir une valeur du paramètre $\alpha$ assez grande (de l'ordre de 0.3). Pour cela, les auteurs ont fait un choix judicieux sur la période d'échantillonnage, le matériau et le choix des tailles et géométries de structures permettant l'obtention du paramètre $\alpha$ désiré. Cependant dans certaines applications, le choix des matériaux n'est pas toujours possible. Par exemple l'utilisation d'un matériau à faible indice de réfraction entraine forcément une plus faible dispersion de son indice effectif. La conséquence est une limitation de son effet large bande. L'utilisation d'un composant multiblaze binaire permet de réduire les contraintes de design pesant sur chaque zone, permettant ainsi plus de degrés de liberté. Il pourra par exemple combiner plusieurs zones, certaines zones étant conçues avec un paramètre $\alpha$ réduit et d'autres avec un paramètre $\alpha$ plus important, sans réduire la bande spectrale d'utilisation.

La technologie de réalisation des composants diffractifs sub longueur d'onde, typiquement la lithographie pour les applications optiques et l'impression 3D pour les structures opérant dans le domaine millimétrique, qui permet de générer n'importe quelle géométrie, est particulièrement adaptée à la fabrication de ces composants, impossibles à réaliser avec des structures classiques échelettes. Elle est complètement compatible de la réalisation de composants combinant différentes zones que cela soit dans la direction x et/ou dans la direction y.

Pour le cas d'un composant multi-blaze binaire correspondant à une fonction lentille de Fresnel telle qu'illustrée figure 12, la lentille présentant une partie centrale Pc et une pluralité de parties périphériques a, chaque zone élémentaire de type i correspond à au moins un secteur d'une partie de la lentille de Fresnel.

Selon un premier mode de réalisation, le secteur d'un type donné correspond à l'ensemble de la partie, c'est-à-dire que chaque partie (Pa, a) constitue une zone d'un certain type, par exemple l'ensemble de la zone centrale est de type 1 (blazée à $\lambda 1$), le premier anneau est d'un deuxième type (blazé à $\lambda 2$), le troisième anneau est d'un troisième type ou du premier type ou du deuxième type.

Selon un deuxième mode de réalisation illustré figure 12a, la partie centrale Pc et chaque anneau périphérique présentent plusieurs secteurs, les secteurs étant de type différents.

Pour le cas d'un réseau multi-blaze binaire correspondant à une fonction réseau tel qu'illustré figure 11, chaque zone élémentaire de type i correspond à un réseau blazé à la longueur de blaze $\lambda i$ d'indice i, et donc chaque zone élémentaire présente une variation d'indice effectif $n_{eff}(i)$ périodique selon un axe X de période $\Lambda$ identique. Pour éviter les problèmes de discontinuité et ne pas rompre la périodicité A, qui permet l'effet de diffraction, la dimension d'une zone élémentaire selon la direction X est égale à un multiple de la période $\Lambda$.

Préférentiellement, pour maximiser l'efficacité de diffraction, les zones élémentaires sont jointives.

De manière générale, la surface S sur laquelle sont agencées les microstructures du composant diffractif 10 ou 20 selon l'invention est plane ou courbe, et le faisceau incident diffracté par le composant est une onde lumineuse (typiquement visible et/ou infrarouge) ou radiofréquence. Pour les surfaces courbes, des technologies telles que le nanoimprint permettant de définir les motifs de structures sur une surface sphérique, par exemple à partir d'un tampon flexible, sont particulièrement bien adaptées. Le tampon étant fabriqué par exemple par lithographie et par gravure.

Le concept de multi blaze binaire est applicable à des composants fonctionnant en réflexion ou en transmission.

Pour un composant multi-blaze binaire configuré pour diffracter par transmission, les zones élémentaires sont réalisées avec un matériau transparent et agencées sur un substrat également transparent, par exemple de la silice.

Un composant multi blaze binaire selon l'invention configuré pour diffracter un faisceau incident Fi selon un faisceau diffracté Fd par réflexion comprend en outre une surface ou un élément réflecteur R.

Préférentiellement, comme illustré figure 13, le réflecteur R est disposé entre les zones élémentaires Zi et un substrat S. Les zones élémentaires sont dans ce cas réalisées avec un matériau transparent, mais le substrat S peut ne pas être transparent.

L'avantage de l'utilisation d'un miroir en dessous est de pouvoir utiliser la dispersion de l'indice effectif des structures sub-longueur d'onde, avec une structure diélectrique qui synthétise la fonction de phase. Dans le cas de l'utilisation d'un métal structuré ou un métal au dessus d'une couche structurée à l'échelle sub-longueur d'onde, il est possible de rencontrer des phénomènes de résonnance ou de transmission extraordinaire qui entrainent une forte chute d'efficacité de diffraction en réflexion.

Le réflecteur est constitué d'une couche métallique ou d'un ensemble multi-couches diélectriques.

Typiquement pour des applications en instrumentation spatiale, on utilise des réseaux réflectifs large bande, et pour des applications en imagerie, pour des fonctions de concentration, ou pour le traitement de faisceau hyper, on utilise des lentilles de Fresnel fonctionnant en mode transmissif, pour s'intégrer facilement dans des systèmes existants (systèmes hybrides mélangeant optique classique et optique diffractive). Mais on pourra retrouver également des réseaux en transmission et des lentilles en reflexion.

Les différentes variantes et modes de réalisation du composant selon l'invention décrits ici sont applicables aux composants fonctionnant en transmission ou en réflexion. Outre la présence ou non d'un réflecteur et le caractère nécessairement transparent ou pas du substrat, la différence est la condition de blaze à vérifier.

L'indice effectif $n_{eff}(i)$ d'un élément diffractif blazé à une longueur d'onde de blaze $\lambda i$ varie entre une valeur minimale $n_{eff/min}(i)$, et une valeur maximale $n_{eff/max}(i)$, avec :

$$\Delta n_{eff}(i) = n_{eff/max}(i) - n_{eff/min}(i)$$

Les microstructures MSi d'une zone de type i présentent une hauteur hi indicé i.

La condition de blaze s'exprime par une relation reliant les grandeurs $\Delta n_{eff}(i)$, hi et $\lambda i$. Elle correspond à une variation d'indice effectif et une hauteur calculée pour induire une variation de phase de $2\pi$ entre faisceau incident et faisceau diffracté.

Avantageusement la loi de phase, et donc la variation d'indice effectif, sur une période (réseau) ou une partie (centrale ou périphérique d'une lentille) est quasi monotone.

Selon un mode de réalisation la loi de phase, et donc la variation d'indice effectif, sur une période ou une partie est constante par sous-intervalles, c'est-à-dire variable par paliers. Les considérations suivantes sont données pour une période d'un réseau mais sont également applicables à chaque partie (centrale et anneaux) d'une lentille de Fresnel. La période $\Lambda$ du réseau est échantillonnée selon une période d'échantillonnage $\Lambda sx$ inférieure à $\Lambda$ divisant la période $\Lambda$ et définissant des intervalles d'échantillonnage.

De manière générale la période d'échantillonnage est différente pour chaque type, mais avantageusement la période d'échantillonnage selon X, $\Lambda sx$, est la même pour tous les types (direction de variation de l'indice effectif). Avantageusement pour une géométrie 2D de microstructures, la période d'échantillonnage selon Y, $\Lambda sy$, est la même pour tous les types. Selon un cas particulier la période d'échantillonnage selon X et Y est identique (maille carrée).

Les microstructures sont agencées à l'intérieur de chaque intervalle d'échantillonnage de manière à correspondre à une valeur donnée d'indice effectif dans l'intervalle. La variation d'indice effectiff $n_{eff}$ selon la période $\Lambda$ est ainsi échantillonnée selon une période $\Lambda s$.

Selon un mode de réalisation, la loi de phase synthétisée avec les microstructures permet de réaliser une loi de phase discontinue par paliers ou sauts, chaque saut correspondant à une valeur donnée de phase et donc à une valeur donnée d'indice effectif.

A noter que la loi de variation de la phase entre 0 et $2\pi$ induite par la variation de l'indice effectif n'est pas nécessairement linéaire (par palier ou non), elle peut être non linéaire, voir localement non monotone.

Pour un réseau fonctionnant par transmission, la condition de Blaze s'écrit :

$$\Delta n_{eff}(i).hi = \lambda i \qquad (6)$$

Pour un composant fonctionnant en réflexion (dans le cas où la couche reflectrice se trouve sous le matériau diélectrique structuré):

$$2. \Delta n_{eff}(i).hi = \lambda i \qquad (7)$$

Comme explicité plus haut dans l'état de la technique, les microstructures (forme, taux de remplissage, hauteur) sont choisies telles que les équations (6) ou (7) soient vérifiées.

Un élargissement de la bande spectrale intrinsèque d'un élément blazé à $\lambda i$ est par ailleurs obtenu pour des microstructures synthétisant une variation d'indice effectif présentant un coefficient $\alpha i$ strictement positif.

Soit pour tout i du composant :

$$\alpha i = \frac{\left(\delta n_{i/min} - \delta n_{i/max}\right)}{\Delta n_{eff}\left(i\right)} \; >0$$

où

$$\Delta n_{eff(i)} = n_{eff/max}(i) - n_{eff/min}(i),$$

$$\delta n_{i/min} = n_{eff/min}(i) - n_{eff/min}(\lambda_{\infty})$$

et

$$\delta n_{i/max} = n_{eff/max}(i) - n_{eff/max}(\lambda_\infty).$$

Avec i correspondant à une longueur d'onde $\lambda i$ de conception (ou longueur d'onde blaze) et $\lambda_\infty$ longueur d'onde grande devant la longueur d'onde de conception $\lambda_0$.

Ces formules sont valables en transmission et en réflexion à condition d'adapter la hauteur h des microstructures.

Afin de simplifier la fabrication du composant multi-blaze binaire, les microstructures des zones élémentaires sont agencées de sorte que la différence $\Delta n_{eff}(i)$ vérifie la condition de blaze pour une valeur de hauteur h identique pour tous les types présents dans le composant.

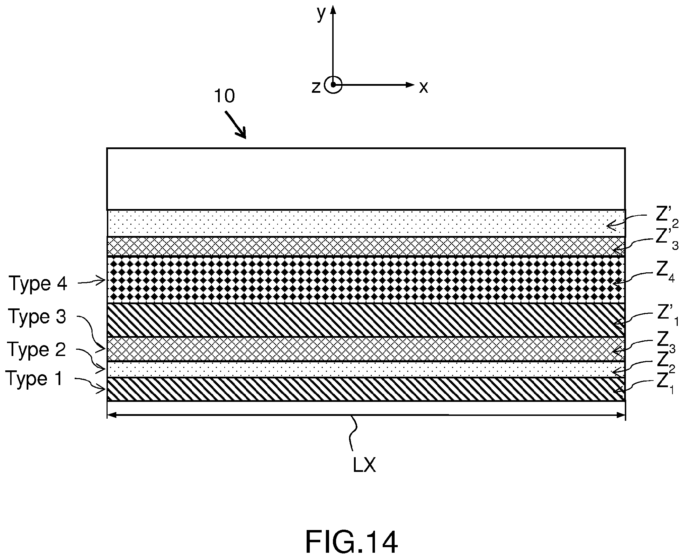

De même pour simplifier la conception et la fabrication du composant réseau multi-blaze binaire, selon un mode de réalisation la dimension LX d'une zone élémentaire selon X correspond à la dimension du composant selon X, tel qu'illustré figure 14. Dans ce cas particulier toutes les zones élémentaires Zi, Z'i ... présentent la même dimension selon X quelque soit leur type.

Les microstructures peuvent être agencées de différentes manières connues de l'état de la technique. Les microstructures présentent une section hexagonale, circulaire ou carrée. Selon un mode de réalisation les microstructures présentent une pluralité de tailles variables le long d'une direction présentant une variation d'indice effectif. Et avantageusement une microstructure au plus est disposée par intervalle d'échantillonnage. Selon un autre mode les microstructures présentent une taille principale $di0$ donnée (par type) et une densité par unité de surface variable le long d'une direction présentant une variation d'indice effectif. Avantageusement $di0$ est identique quelque soit i et égal à $d0$.

Nous allons à présent décrire des exemples de réalisation de réseau par réflexion agencé sur une surface S plane XY, mais les agencements décrits sont compatibles de réseaux fonctionnant en transmission ou sur une surface courbe, par exemple concave, convexe, sphérique ou cylindrique.

Selon un mode de réalisation les zones élémentaires sont agencées selon une direction Y perpendiculaire à X de sorte que tous les types se succèdent une fois chacun une pluralité de fois. Autrement dit si le composant multiblaze binaire comprend des zones de trois types différents, les zones selon Y se succèdent Z1, Z2, Z3, puis à nouveau trois zone chacune d'un type différent Z'2, Z'1, Z'3, ...et ainsi de suite. De manière générale les dimensions selon Y des différentes zones sont différentes, mais avantageusement la succession des types et la dimension selon Y des zones de chaque type se répète à l'identique. Ceci permet de simplifier le masque élémentaire qui sert à la fabrication du réseau multiblaze binaire.

Ainsi on aura selon Y la succession Z1, Z2, Z3, puis Z'1, Z'2, Z'3, puis Z"1, Z"2, Z"3, les zones d'un même type présentant une dimension selon Y identique pour chaque alternance (c'est-à-dire un même multiple de la période d'échantillonnage $\Lambda sy$ selon Y). Le choix de pondération pour chaque type s'effectue sur l'alternance élémentaire Z1, Z2, Z3 qui est ensuite répétée selon Y.

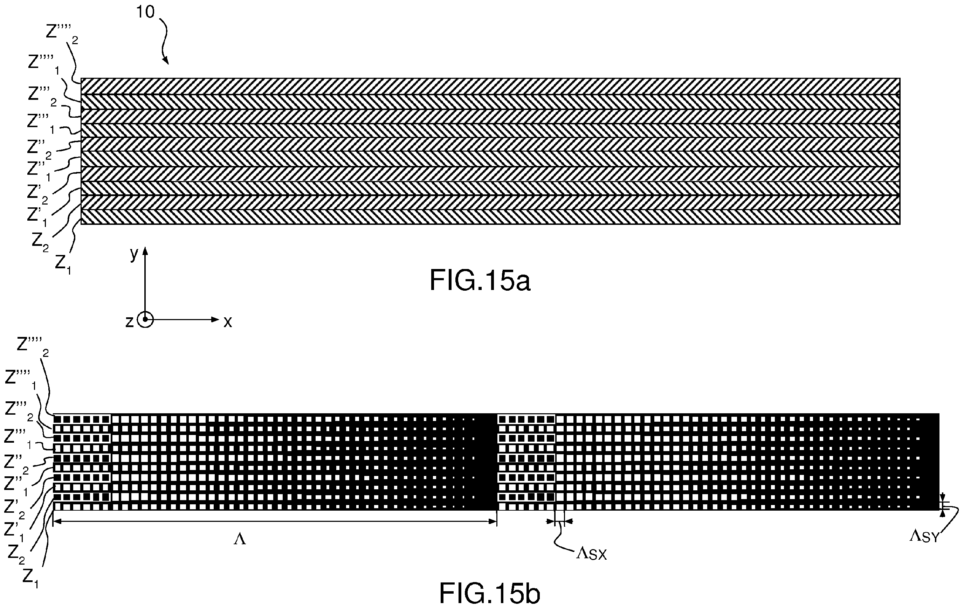

La figure 15 illustre un exemple de réseau de ce type. Le réseau est constitué de deux types de zone 1 et 2 avec $\lambda1$ = 850 nm et $\lambda2$ = 500 nm et sont représentées deux périodes $\Lambda$ selon X et 5 alternances des deux zones selon Y. Les périodes d'échantillonnage $\Lambda sx$ et $\Lambda sy$ sont identiques, et chaque zone présente une dimension selon Y égale à une période d'échantillonnage $\Lambda sy$ selon Y.

Les zones comprennent des trous et/ou piliers. La couleur noire correspond à un matériau diélectrique tel la silice, et le blanc à de l'air.

La zone 1 blazée à 850 nm comprend 6 piliers et 40 trous, et la zone 2 blazée à 500 nm comprend 46 trous.

La période $\Lambda$ est de 16 $\mu$m et la hauteur h est de 1.5 $\mu$m.

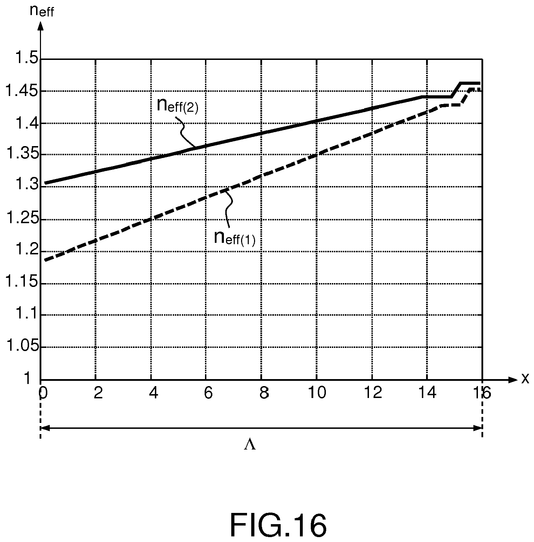

La figure 16 illustre la variation d'indice effectif sur une période obtenue pour les deux longueurs de blaze. La courbe en trait plein correspond à la zone de type 2 blazée à 500 nm et la courbe en pointillé correspond à la zone de type 1 blazée à 850 nm. Sur cet exemple la variation d'indice est linéaire et lissée à partir de la valeur obtenue pour chaque maille.

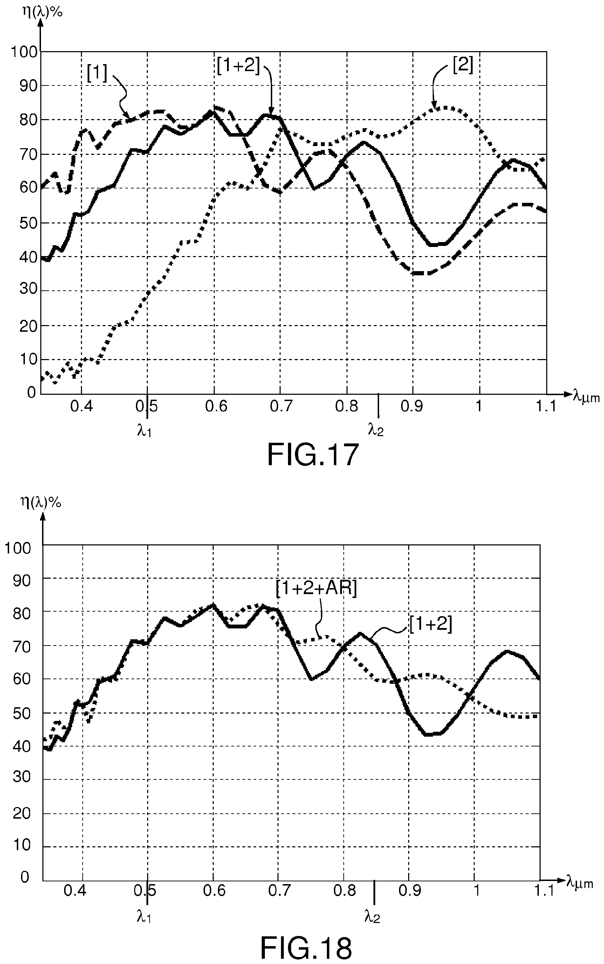

La figure 17 illustre les efficacités de diffraction (en %) $\eta(\lambda)$ calculées:

- [1] :pour un réseau de type 1 blazé à 500 nm seul,
- [2] :pour un réseau de type 2 blazé à 850 nm seul,
- [1+2] : pour un réseau 10 selon l'invention illustré figure 15 comprenant plusieurs zones de type 1 et plusieurs zones de type 2 de superficie globale égales. De ce fait un poids identique est donné aux deux longueurs d'onde de blaze.

On constate que l'efficacité de diffraction globale sur la bande spectrale de diffraction [0,45 $\mu$m, 1,1$\mu$m] est améliorée et n'est pas équivalente à la moyenne des efficacités de chaque réseau blazé pris isolément. Au niveau de la diffraction il existe une interaction entre les amplitudes complexes diffractées des deux types de réseaux.

Les oscillations de fortes amplitudes de l'efficacité aux grandes longueurs d'ondes sont dues un effet Fabry Perot spécifique au mode réflectif.

Selon un mode de réalisation préféré, le composant diffractif selon l'invention comprend en outre une couche antireflet AR, préférentiellement disposée par dessus les microstructures, tel qu'illustré figure 19. La présence de cette couche antireflet atténue fortement l'amplitude des oscillations.

La couche antireflet peut être déposée par exemple par PVD pour « Physical Vapour Deposition » comme l'évaporation ou la pulvérisation ou par CVD pour « Chemical Vapour Deposition » comme l'ALD « Atomic Layer Deposition » ou la PECVD « Plasma Enhanced Chemical Vapour Deposition »

Selon un mode de réalisation, l'air entre les microstructures (piliers) ou dans celles-ci (trous) est remplacé par un matériau. On ajoute ainsi un degré de liberté au design de la structure, et la présence de ce matériau facilite le dépôt de la couche AR le cas échéant.

Selon un mode de réalisation, la couche antireflet AR est une couche structurée à l'échelle sub-longueur d'onde, tel qu'illustré figure 19bis. La figure 19bisa illustre la structure du composant selon l'invention vu de profil, la figure 19bisb illustre la couche antireflet AR vue de dessus et la figure 19bisc illustre un exemple de zones selon l'invention vues de dessus.

La structuration de la couche antireflet consiste par exemple en la réalisation de trous dans celle-ci, préférentiellement traversant comme illustré figure 19bis, ce qui baisse l'indice effectif de la couche AR. La couche AR constitue alors un meilleur anti reflet pour des microstructures réalisées avec un matériau bas indice.

Une variante de ce mode de réalisation préféré consiste à ajouter une pluralité de microstructures secondaires MSsi aux microstructures de base MSi, les microstructures secondaires présentant une taille inférieure à la taille des microstructures de base. Ces microstructures secondaires sont réalisables technologiquement lorsque les microstructures initiales présentent des tailles adaptées pour la diffraction des ondes hyperfréquences, c'est-à-dire typiquement des tailles de l'ordre du mm ou du cm (voir document WO2014/128015 figures 8 et 9 et description correspondante). Elles permettent un ajustement plus fin de la valeur de l'indice effectif et réalisent une couche d'adaptation d'impédance (anti reflet).

Les figures 20 et 21 illustrent deux exemples de réseau 10 selon l'invention fonctionnant en mode réflectif tel qu'illustré figure 13, constitués de deux types de zones, le type 1 correspondant à un blaze à 850 nm et le type 2 à un blaze à 500 nm. La couleur noire correspond à de la matière et la couleur blanche à de l'air. La période $\Lambda$ est de 2,45 $\mu$m et une période selon X est constituée de 7 trous de hauteur 1,7 $\mu$m dont la taille respective est déterminée de façon à obtenir le blaze souhaité. Le matériau est de la silice d'indice n=1,455 à lambda= 0,7 $\mu$m.

Le réseau de la figure 20 est constitué d'une alternance de zones de type 1 et 2, chaque zone correspondant à une fois la période d'échantillonnage selon Y. La proportion de surface de chaque type est de 50 %, chaque type a donc un poids identique.

Le réseau de la figure 21 est constitué d'une alternance d'une zone de type 1 présentant une dimension selon Y correspondant à une fois la période d'échantillonnage selon Y, et d'une zone de type 2 présentant une dimension selon Y correspondant à deux fois la période d'échantillonnage selon Y. La proportion de surface du composant avec un réseau blazé de type 1 est donc de 33% et la proportion de surface pour le type 2 est de 67 %, un poids plus important est donc donné au type 2 (blaze à 500 nm).

La figure 22 illustre les courbes d'efficacité de diffraction calculées des deux exemples décrits précédemment, la courbe C50/50 correspondant au réseau de la figure 20 et la courbe C67/33 correspondant au réseau de la figure 21.

On constate que les deux courbes présentent une efficacité de diffraction très large bande entre 0,35 et 1,1 $\mu$m. On constate également que la courbe C67/33 qui correspond à un réseau donnant plus de poids au type 2 présente une efficacité globalement supérieure aux longueurs d'onde visibles et inférieure aux longueurs d'onde IR, par comparaison au réseau donnant un poids équivalent aux deux types.

Ainsi, le poids respectif des différents types permet une grande souplesse dans le design du composant diffractif, et permet de choisir les performances spectrales souhaitées du composant en libérant les contraintes pesant sur les zones d'un type donné.

Du point de vue application, cette souplesse apporte un avantage important. En effet par exemple pour des applications en spectrométrie, lors de la conception d'un nouvel instrument il est intéressant compte tenu du développement de nouveaux détecteurs de pouvoir ajuster l'efficacité de diffraction du réseau par rapport à la sensibilité spectrale des détecteurs. Pour des détecteurs moins sensibles dans l'UV que dans l'infrarouge, il peut être intéressant de compenser avec un réseau qui soit large bande avec une efficacité améliorée sur les basses longueurs d'ondes et légèrement réduite sur les plus grandes longueurs d'onde.

Il est possible également dans un système optique de combiner plusieurs types de détecteurs sensibles à des gammes spectrales de longueurs d'onde différentes.

Pour le domaine photovoltaïque les systèmes de capteur de flux très large bande nécessitent de disposer d'une optique capable de focaliser la lumière sur une cellule multi-jonction et la capacité à ajuster la bande spectrale sans perdre en efficacité. En effet, dans le photovoltaïque utilisant des cellules multi-jonctions, le montage électrique des cellules étant en série, le courant est limité par le courant minimum produit par différentes jonctions, elles-mêmes ayant des sensibilités spectrales légèrement différentes. Dans ce cas il est avantageux de disposer d'une optique permettant d'ajuster l'efficacité de diffraction et donc le flux pour homogénéiser le courant généré par chaque jonction.

**Revendications**

1. Composant diffractif (10) large bande apte à diffracter un faisceau incident présentant une longueur d'onde comprise dans une bande spectrale de diffraction,

- le composant diffractif comprenant une pluralité de zones élémentaires agencées sur une surface (S), chaque zone élémentaire appartenant à un type indicé par un indice i compris entre 1 et n avec n strictement supérieur à 1, l'indice i correspondant à une longueur d'onde de blaze λi d'indice i, les longueur d'onde de blaze étant comprises dans la bande spectrale de diffraction,

- une zone élémentaire de type i (Zi, Z'i, Z"i) comprenant une pluralité de microstructures (MSi) présentant respectivement au moins une taille (di) inférieure à 1,5 fois la longueur d'onde de blaze (λi) d'indice i, les microstructures étant agencées pour former un matériau artificiel présentant une variation d'indice effectif ($n_{eff}(i)$) de sorte qu'une zone élémentaire de type i constitue un élément diffractif blazé à la longueur de blaze λi d'indice i,

- les différentes valeurs des longueurs d'onde de blaze et la proportion de surface occupée par l'ensemble des zones élémentaires d'un type donné étant fonction d'une efficacité de diffraction globale souhaitée dans la bande spectrale de diffraction.

2. Composant diffractif (10) selon la revendication 1 dans lequel les zones élémentaires sont jointives.

3. Composant diffractif (10) selon l'une des revendications précédentes dans lequel ladite surface (S) est plane ou courbe.

4. Composant diffractif (10) selon l'une des revendications précédentes dans lequel le faisceau incident est une onde lumineuse ou radiofréquence.

5. Composant selon l'une des revendications précédentes dans lequel les zones élémentaires sont agencées sur un substrat transparent, ledit composant étant configuré pour diffracter le faisceau par transmission.

6. Composant selon l'une des revendications 1 à 4 comprenant en outre un réflecteur, le réflecteur étant disposé entre les zones élémentaires et un substrat, ledit composant étant configuré pour diffracter le faisceau par réflexion.

7. Composant selon l'une des revendications précédentes correspondant à une lentille de Fresnel présentant une partie centrale et une pluralité de parties périphériques, dans lequel chaque zone élémentaire de type i correspond à au moins un secteur d'une partie de la lentille de Fresnel.

8. Composant selon l'une des revendications 1 à 6 correspondant à un réseau, chaque zone élémentaire de type i correspondant à un réseau blazé à la longueur de blaze λi d'indice i, chaque zone élémentaire présentant une variation d'inde effectif périodique selon un axe X de période (A) identique pour tous les types, une dimension d'une zone élémentaire (LX) selon la direction X étant égale à un multiple de la période.

9. Composant (10) selon la revendication 8 dans lequel la dimension d'une zone élémentaire selon X (LX) correspond à la dimension du composant selon X.

10. Composant selon la revendication 9 dans lequel les zones élémentaires sont agencées selon une direction Y perpendiculaire à X de sorte que tous les types se succèdent une fois chacun, une pluralité de fois, et dans lequel l'ordre des types et la dimension selon Y des zones de chaque type se répète à l'identique.

11. Composant selon l'une des revendications précédentes dans lequel les microstructures d'une zone élémentaire présentent une forme de pilier, une forme de trou ou une combinaison des deux.

12. Composant diffractif (10) selon l'une des revendications précédentes comprenant en outre une couche antireflet disposée par dessus les microstructures.

13. Composant diffractif (10) selon la revendication 12 dans lequel la couche antireflet est une couche structurée à l'échelle sub-longueur d'onde.

14. Composant diffractif (10) l'une des revendications précédentes comprenant en outre une pluralité de microstructures secondaires présentant une taille inférieure à la taille des microstructures de base.

15. Composant diffractif selon l'une des revendications précédentes dans lequel :

- une variation d'indice effectif d'un élément diffractif blazé à une longueur d'onde de blaze λi sur une période d'un réseau ou une partie d'une lentille de Fresnel, présente une valeur minimale ($n_{eff/min}(i)$) et une valeur maximale ($n_{eff/max}(i)$), la différence desdites valeurs d'indice effectif étant dénommée $\Delta n_{eff}(i)$,

- les microstructures (MSi) d'une zone de type i présentent une hauteur hi indicé i,

- les grandeurs $\Delta n_{eff}(i)$, hi et λi étant reliées par une condition de blaze définie par :

$\Delta n_{eff}(i).hi = \lambda i$ pour un composant diffractif fonctionnant en transmission,

2. $\Delta n_{eff}(i).hi = \lambda i$ pour un composant diffractif fonctionnant en réflexion.

16. Composant diffractif (10) selon la revendication 15 dans lequel pour chaque zone élémentaire de type i, les microstructures sont agencées de sorte que la différence $\Delta n_{eff}(i)$ vérifie la condition de blaze pour une valeur de hauteur h identique pour tous les types.

17. Composant diffractif (10) selon l'une des revendications 15 ou 16 dans lequel pour chaque zone élémentaire de type i, les microstructures sont agencées de sorte que la différence $\Delta n_{eff}(i)$ est choisie pour qu'un paramètre de caractérisation $\alpha i$ défini ci-dessous soit strictement supérieur à 0 quelque soit i :

$$\alpha i = \frac{\left(\delta n_{i/min} - \delta n_{i/max}\right)}{\Delta n_{eff}\left(i\right)} \; >0$$

Avec :

$n_{eff}(i)$ variation de l'indice effectif d'une zone élémentaire blazée à la longueur d'onde $\lambda i$ sur une période (réseau) ou une partie (lentille de Fresnel) entre une valeur minimale $n_{eff/min}(i)$ et une valeur maximale $n_{eff/max}(i)$,

$$\Delta n_{eff}(i) = n_{eff/max}(i) - n_{eff/min}(i),$$

$$\delta n_{i/min} = n_{eff/min}(i) - n_{eff/min}(\lambda_\infty)$$

et

$$\delta n_{i/max} = n_{eff/max}(i) - n_{eff/max}(\lambda_\infty).$$

Avec i correspondant à une longueur d'onde $\lambda_i$ de conception (ou longueur d'onde blaze) et $\lambda_\infty$ longueur d'onde grande devant la longueur d'onde de conception $\lambda_0$.

FIG.1

FIG.2

FIG.4a

FIG.4b

FIG.4c

FIG.5a

FIG.5b

η(λ/λ$_0$)%

## FIG.3

η%

## FIG.8

FIG.6

FIG.7

FIG.9

FIG.10

10

Z'$_4$

Type 4

Type 3

Type 2

Type 1

Z'''$_1$

Z'$_3$

Z$_2$

y

z

x

Z$_1$

Z'$_2$

Z''$_1$

Z$_4$

Z'$_1$

Z$_3$

## FIG.11a

z

d$_1$

MS$_1$

h$_1$

Λ

Λ

x

Z$_1$

## FIG.11b

n$_{eff(1)}$

n$_{eff/max(1)}$

Δ$_{neff(1)}$

n$_{eff/min(1)}$

Λ

Λ

## FIG.11c

FIG.12a

FIG.12b

FIG.12c

FIG.13

FIG.14

FIG.15a

FIG.15b

$Z''''_2$
$Z''''_1$
$Z'''_2$
$Z'''_1$
$Z''_2$
$Z''_1$
$Z'_2$
$Z'_1$
$Z_2$
$Z_1$

10

y
z x

$\Lambda$
$\Lambda_{SX}$
$\Lambda_{SY}$

FIG.16

FIG.17

FIG.18

FIG.19

FIG.19 bis

Z'2 - Type 2
Z'1 - Type 1
Z2 - Type 2
Z1 - Type 1
$\Lambda_{SY}$
$\Lambda_{SX}$
$\Lambda$

FIG.20

y
z
x

Z'2 - Type 2
Z'1 - Type 1
Z2 - Type 2
Z1 - Type 1

FIG.21

FIG.22

Europäisches
Patentamt

European
Patent Office

Office européen
des brevets

# RAPPORT DE RECHERCHE EUROPEENNE

Numéro de la demande

EP 17 15 3295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/076581 A1 (LEE-BOUHOURS MANE-SI LAURE [FR] ET AL) 28 mars 2013 (2013-03-28) | 1-13,15 | INV. G02B5/18 G02B27/42 |
| A | * alinéa [0029] - alinéa [0058]; figure 2 * ----- | 14,16,17 | |
| X | US 2015/380829 A1 (LEE-BOUHOURS MANE-SI LAURE [FR] ET AL) 31 décembre 2015 (2015-12-31) * alinéa [0071] - alinéa [0108]; figures 3,4 * ----- | 1,3,5,11 | |
| A | US 2007/103782 A1 (LEE MANE-SI L [FR] ET AL) 10 mai 2007 (2007-05-10) * le document en entier * ----- | 1-17 | |

DOMAINES TECHNIQUES RECHERCHES (IPC)

G02B

Le présent rapport a été établi pour toutes les revendications

| Lieu de la recherche | Date d'achèvement de la recherche | Examinateur |
|---|---|---|
| Berlin | 15 mai 2017 | Andreassen, Jon |

EPO FORM 1503 03.82 (P04C02)

**EP 3 206 059 A1**

## ANNEXE AU RAPPORT DE RECHERCHE EUROPEENNE
### RELATIF A LA DEMANDE DE BREVET EUROPEEN NO.

EP 17 15 3295

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-05-2017

| Document brevet cité au rapport de recherche | Date de publication | Membre(s) de la famille de brevet(s) | Date de publication |
|---|---|---|---|
| US 2013076581 A1 | 28-03-2013 | EP 2573872 A1<br>ES 2570679 T3<br>FR 2980648 A1<br>US 2013076581 A1 | 27-03-2013<br>19-05-2016<br>29-03-2013<br>28-03-2013 |
| US 2015380829 A1 | 31-12-2015 | EP 2959542 A1<br>FR 3002697 A1<br>US 2015380829 A1<br>WO 2014128015 A1 | 30-12-2015<br>29-08-2014<br>31-12-2015<br>28-08-2014 |
| US 2007103782 A1 | 10-05-2007 | EP 1678531 A1<br>FR 2861183 A1<br>US 2007103782 A1<br>WO 2005038501 A1 | 12-07-2006<br>22-04-2005<br>10-05-2007<br>28-04-2005 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005038501 A

- WO 2014128015 A

**Littérature non-brevet citée dans la description**

- Broadband blazing with artificial dieclectrics. *OPTICS LETTERS,* 2004, vol. 29 (14
- On the effective medium theory of subwavelength periodic structures. *Journal of Modern Optics,* 1996, vol. 43 (10), 2063-2085

- **PH.LALANNE.** Waveguiding in blazed-binary diffractive elements. *Journal of Opt. Soc. Am. A.,* 1999, vol. 16, 2517-2520